# EUROPEAN PATENT APPLICATION

(11) **EP 2 399 973 A1**
(43) Date of publication of application: **28.12.2011**
(21) Application number: 10167318.4
(22) Date of filing: 25.06.2010
(51) Int. Cl.: C10J 3/00, C10J 3/86, F01K 23/06, F02C 3/28

(54) **A biomass gasification system and a method for biomass gasification**

(71) Applicant: SIEMENS AKTIENGESELLSCHAFT, 80333 München (DE)
(72) Inventor: Gururaja Rao, Sridhar, 590079 Bengalore (IN); Sethuvenkatraman, Ganapathi Subbu, 625 214 Maduarai (IN)

(57) **Abstract**

A biomass gasification system (1) includes a gasifier (2) for producing a combustible gas known as producer gas or synthesis gas (3) by gasifying biomass in presence of oxidizer, a gas engine (4) for receiving the synthesis gas (3) atleast from one of the gasifier (2) or a gas storage (5) for generating energy using the synthesis gas (3), and the gas storage (5) for receiving and storing the synthesis gas (3) and providing the synthesis gas (3) stored in the gas storage (5) to the gas engine (4) on a basis of availability of the synthesis gas (3) from the gasifier (2) to the gas engine (4). The gas storage (5) further provides the synthesis gas (3) to the gasifier (2) for providing heat to the gasifier (2) to enhance the gasification process.

## Description

The invention relates to a biomass gasification system and a method for biomass gasification.

Biomass gasification system includes a gasifier and a gas engine. The gasifier produces a combustible gas known as producer gas or synthesis gas by a gasification process in presence of an oxidizer. The synthesis gas is further used by the gas engine to produce power.

During start-up of the Biomass gasification system, external power needs to be supplied to the gasifier to meet the captive power requirements until the synthesis gas is generated that could in turn be supplied to the gas engine to generate the power. Thus, for the purpose of starting the gasification system, external power source such as grid electricity, diesel generator or a storage battery are normally used. But, availability of these external power sources in remote places cannot be ensured all the time and at the same time some of these external power sources are expensive solution for the start-up operation.

One possible way to start the Biomass gasification system is to start the gasifier by using the gas engine that operates on multiple fuels, for e.g. natural gas during start-up and synthesis gas during normal operation. In such a case, the gas engine needs modification/additional attachments and also continuous replenishing of start-up fuel would be required.

It is an object of the invention to start biomass gasification system in a self-sustainable way without depending on any external power source.

The object of the invention is achieved by a biomass gasification system of claim 1 and method for biomass gasification according to the claim 9.

According to one embodiment, the biomass gasification system includes a gasifier for producing a synthesis gas by gasifying biomass in presence of oxidizer, a gas engine for receiving the synthesis gas at least from one of the gasifier or a gas storage for generating energy using the synthesis gas, the gas storage for receiving and storing the synthesis gas and for providing the synthesis gas stored in the gas storage to the gas engine on a basis of availability of the synthesis gas from the gasifier to the gas engine. Such a system helps to provide the gasification system which can start-up and run self-sustainably without any external power source.

According to another embodiment, the system further includes a first gas flow control mechanism for controlling flow of the synthesis gas from the gas storage to the gas engine, so that only the required amount of synthesis gas stored in the gas storage is sent to the gas engine. This helps to conserve the stored synthesis gas for other utilities.

According to yet another embodiment, the system includes a monitoring system adapted to measure performance parameters of the gas engine, so that, the first gas flow control mechanism adapted to control flow of the synthesis gas from the gas storage to the gas engine is based on performance of the gas engine. This helps to provide metrics for controlling flow of the synthesis gas, thus, makes the first flow control mechanism less prone to errors.

According to an exemplary embodiment, the gas storage is further adapted to provide the synthesis gas to the gasifier for providing heat to the gasifier in order to accelerate the gasification reactions during start-up. This helps to provide additional heat to the gasifier thereby accelerating the gasification reaction and thereof reducing start time for biomass gasification.

According to yet another embodiment, the system further includes a second gas flow control mechanism for controlling flow of the synthesis gas from the gas storage to the gasifier on basis of heat required by the gasifier during start-up of the gasification system. Such a system regulates flow of the synthesis gas from the gas storage to the gasifier, which subsequently helps to conserve the synthesis gas stored in the gas storage for future use and utilization of the synthesis gas by other utilities.

According to one embodiment, the gas engine is adapted to produce waste heat while generating energy using the synthesis gas, while the biomass gasification system further includes a heat exchanger adapted to transfer heat from the waste heat to the synthesis gas flowing from the gas storage to the gasifier. Such a system provides more heat to the synthesis gas flowing from the gas storage to the gasifier thus reducing the start-up time of the biomass gasification system.

According to another embodiment, the system further includes a gas cleaning system for cleaning the synthesis gas flowing out of the biomass gasifier before being received by the gas engine or the gas storage. Such a system removes impurities of the synthesis gas, so that working of the gas engine doesn't get hampered due to the impurities of the synthesis gas.

According to yet another embodiment, the system further includes a compressor to compress the synthesis gas before storing the synthesis gas in the gas storage. This helps to store more volume of the synthesis gas, so as to provide the synthesis gas to the gasifier for longer time period as required by the gasifier for the start-up process.

According to an exemplary embodiment, the system further includes a gas separation membrane system adapted to remove inert substances such as carbon dioxide and nitrogen from synthesis gas stored in the gas storage. This helps to enrichment of synthesis gas.

The above-mentioned and other features of the invention will now be addressed with reference to the drawings of a preferred embodiment of the present biomass gasification system. The illustrated embodiment of the biomass gasification system is intended to illustrate, but not limit the invention. The drawings contain the following figures, in which like numbers refers to like parts, throughout the description and drawings.

FIGURE illustrates a schematic diagram of a biomass gasification system for storing a synthesis gas into a gas storage and utilizing the synthesis gas stored in the gas storage during start-up of the biomass gasification system.

FIGURE shows a biomass gasification system 1 according to an embodiment of the invention. The biomass gasification system 1 has a gasifier 2 for producing a synthesis gas 3 by gasifying biomass in presence of oxidizer, a gas engine 4 for receiving the synthesis gas 3 atleast from one of the gasifier 2 or a gas storage 5 for generating energy using the synthesis gas 3, the gas storage 5 for receiving and storing the synthesis gas 3 flowing out of the gasifier 2 and for providing the synthesis gas 3 stored in the gas storage 5 to the gas engine 4.

The gasifier 2 is a thermo-chemical reactor where the biomass is gasified in presence of oxidizer undergoing through various complex physical and chemical processes take place to process the biomass like drying, pyrolysis, combustion and reduction processes. Biomass when subjected to these reactions in presence of the oxidizer the synthesis gas 3 is produced.

Biomass used inside the gasifier 2 can be any renewable organic matter generated by plants through photosynthesis in which the solar energy combines the carbon dioxide and moisture to form carbohydrates and oxygen. Some examples of biomass are forest or plantation waste; weeds like julifora prosopis, lantana camara, agricultural residues such as maize cobs, stalks of cotton or pulses, coconut shells, rice husk, rice stalks etc.

The oxidizer can be air, oxygen, steam or combination of air, oxygen or steam or any such element which can gasify biomass inside the gasifier 2.

The producer gas or synthesis gas 3 is primarily composed of various gaseous species like Carbon monoxide (CO), Hydrogen (H₂) , Methane (CH₄) , Carbon dioxide (CO₂) and Nitrogen (N₂)

The synthesis gas 3 also includes various impurities like dust particles, tar, water vapor or any such impurities. So, the synthesis gas 3 is cleaned using a first gas cleaning system 9 to remove the impurities before taking the synthesis gas 3 to the gas engine 4 for producing energy and for storing into the gas storage 5.

In an alternate embodiment, the synthesis gas 3 flowing out of the gasifier 2 can be cleaned using the gas cleaning system 9 before being received by at least the gas engine 4 or the gas storage 5.

The gas cleaning system 9 may include gas cleaning techniques like cyclone, wet-scrubbing techniques such as water and oil scrubbers and bubblers, cloth filters, electrostatic precipitators for removal of impurities from the synthetic gas.

The synthesis gas 3 stored inside the gas storage 5 is further processed to remove inert substances like CO₂ and N₂, using a gas separating membrane system 11. This helps in enrichment of the gas that could be used for a number of applications where high calorific gas is required including application such as solid oxide fuel cells, molten carbon fuel cells etc.

The gas engine 4 uses the synthesis gas 3 as fuel to produce energy. Normally, the gas engine 4 uses the synthesis gas 3 produced by the gasifier 2 as the fuel. But, during start-up of the gasifier 2, when the gasifier 2 is not able to provide sufficient amount of the synthesis gas 3 to the gas engine 4, the gas storage 5 provides the synthesis gas 3 stored inside the gas storage 5 to the gas engine 4. As soon as the gasifier 2 starts generating the synthesis gas 3, flow of synthesis gas 3 from the gas storage 5 to the gas engine 4 is reduced gradually and the synthesis gas 3 is then further supplied from the gasifier 2 to the gas engine 4. In cases, when due to any discrepancies, flow of the synthesis gas 3 from the gasifier 2 reduced, the synthesis gas 3 from the gas storage 5 can be provided as a supplement to run the gas engine 4.

The flow of synthesis gas 3 stored in the gas storage 5 to the gas engine 4 is controlled by a first gas flow control mechanism 6. The first gas control flow mechanism 6 controls the flow of the synthesis gas 3 on the basis of the availability of the synthesis gas 3 from the gasifier 2. And if the synthesis gas 3 from the gasifier 2 is insufficient for the gas engine 4 to run and produce energy, than the first gas flow mechanism 6 increases flow of the synthesis gas 3 stored inside the gas storage 5 to the gas engine 4. The first gas flow mechanism 6 is a mechanical control valve like ball-check valve, control valve, gate valve, shut-off valve, etc which can be handled manually or automated for increasing and decreasing flow of the synthesis gas 3 stored inside the gas storage 5. In an exemplary embodiment, the first gas flow mechanism 6 also controls the gas flow the engine based on performance of the gas engine by using a monitoring system which measures performance parameters such as speed of the gas engine 5 or frequency of occurrence and content of oxygen or carbon monoxide present in an exhaust of the gas engine 5. When it is measured that these performance parameters differ from a pre-set value, than the mechanical valve has to be opened or closed automatically.

Before storing inside the gas storage 5, the synthesis gas 3 is compressed using a compressor 10, so that the synthesis gas 3 is compressed to store larger amount of the synthesis gas 3 inside the gas storage 5. This will make available the synthesis gas 3 beyond the requirements of the gas engine 4 for other requirements such as for purposes of enriched synthesis gas after separation/removal of inert substance such as CO₂ and N₂ from the synthesis gas 3.

Initially, during the start of the gasification system 1, the gasifier 2 can be cold i.e. at ambient temperature or in warm condition. Thus, the gasification system 1 will take certain time to further warm up before it starts generating synthesis gas 3. So, to provide excess heat to the gasification system 1 for heating up of gasifier walls during the start-up process, the system 1 uses the waste heat 13 generated by the gas engine 4 as a by-product while generating energy. The waste heat 13 flows through a heat exchanger 8 to transfer heat from the waste heat 13 to the synthesis gas 3 stored inside the gas storage 5, wherein the synthesis gas 3 after receiving heat flows to the gasifier 2 for providing excess heat to the gasifier 2. As a result, the start-up time to start the gasification system will be reduced. In one embodiment, the synthesis gas 3 after receiving heat moves into an oxidation or combustion zone of the gasifier 2 for reducing the start-up time.

The flow of synthesis gas 3 from the gas storage 5 to the gasifier 2 is controlled by a second gas flow control mechanism 7 on basis of heat required by the gasifier 2. The second gas flow mechanism 7 is a mechanical valve like ball-check valve, control valve, gate valve, shut-off valve, etc which can be handled manually or automated for increasing and decreasing flow of the synthesis gas 3 stored inside the gas storage 5 to the gasifier 2.

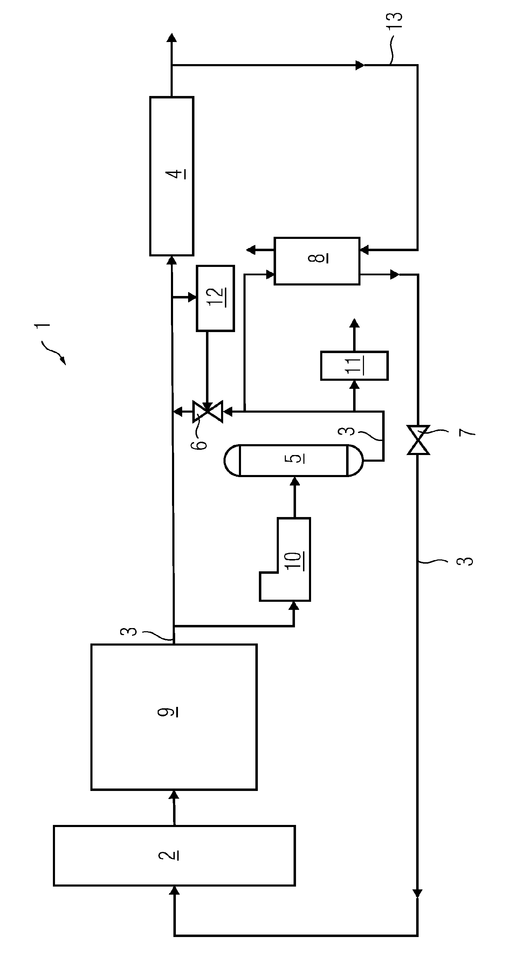

## Claims

1. A biomass gasification system (1) comprising:
- a gasifier (2) adapted to produce a synthesis gas (3) by gasifying biomass in presence of oxidizer and adapted to provide the synthesis gas (3) to a gas engine (4) and the gas storage(5),
- the gas engine (4) adapted to receive the synthesis gas (3) atleast from one of the gasifier (2) or the gas storage (5) for generating energy using the synthesis gas (3), and
- the gas storage (5) adapted to receive and store the synthesis gas (3) from the gasifier (2), and to provide the synthesis gas (3) stored in the gas storage (5) to the gas engine (4) on a basis of availability of the synthesis gas (3) from the gasifier (2) to the gas engine (4).

2. The biomass gasification system (1) according to claim 1, comprising a first gas flow control mechanism (6) adapted to control flow of the synthesis gas (3) from the gas storage (5) to the gas engine (4).

3. The biomass gasification system (1) according to claim 2, comprising a monitoring system (12) adapted to measure performance parameters of the gas engine (4), wherein the first gas flow control mechanism (6) adapted to control flow of the synthesis gas (3) from the gas storage (5) to the gas engine (4) on a basis of performance of the gas engine (4).

4. The biomass gasification system (1) according to any of the claims from 1 to 3, wherein the gas storage (5) is further adapted to provide the synthesis gas (3) to the gasifier (2) for providing heat to the gasifier (2) during start-up of the gasification system (1).

5. The biomass gasification system (1) according to claim 4, comprising a second gas flow control mechanism (7) adapted to control flow of the synthesis gas (3) from the gas storage (5) to the gasifier (2) on basis of heat required by the gasifier (2) during start-up of the gasification system (1).

6. The biomass gasification system (1) according to any of the claims 4 or 5, wherein the gas engine (4) is adapted to produce waste heat (13) while generating energy using the synthesis gas (3), wherein the biomass gasification system (1) further comprising a heat exchanger (8) adapted to transfer heat from the waste heat (13) to the synthesis gas (3) flowing from the gas storage (5) to the gasifier (2).

7. The biomass gasification system (1) according to any of the claims from 1 to 6, comprising:
- a gas cleaning system (9) for cleaning the synthesis gas (3) flowing out of the biomass gasifier (2) before being received by atleast the gas engine (4) or the gas storage (5).

8. The biomass gasification system (1) according to any of the claims from 1 to 7, comprising:
- a compressor (10) to compress the synthesis gas (3) before storing the synthesis gas (3) in the gas storage (5).

9. The biomass gasification system (1) according to any of the claims 7 or 8 comprising:
- a gas separation membrane system (11) adapted to remove inert substances from the synthesis gas (3) stored inside the gas storage (5).

10. A method for biomass gasification comprising:
- producing a synthesis gas (3) by gasifying biomass in presence of oxidizer inside a gasifier (2), providing the synthesis gas (3) to a gas engine (4) atleast from one of the gasifier (2) or a gas storage (5) for generating energy using the synthesis gas (3),
- receiving and storing the synthesis gas (3) inside the gas storage (5),
- providing the synthesis gas (3) stored in the gas storage (5) to the gas engine (4) on a basis of availability of the synthesis gas (3) from the gasifier (2) to the gas engine (4) .

11. The method according to claim 9 comprising:
- controlling flow of the synthesis gas (3) from the gas storage (5) to the gas engine (4) by using a first gas flow control mechanism (6).

12. The method according to claim 10 comprising:
- a monitoring system (12) adapted to measure performance parameters of gas engine (4), wherein the first gas flow control mechanism (6) adapted to control flow of the synthesis gas (3) from the gas storage (5) to the gas engine (4) on a basis of performance of the gas engine(4).

13. The method according to any of the claims from 10 to 12, comprising:
- providing the synthesis gas (3) stored in the gas storage (5) to the gasifier (2) for providing heat to the gasifier (2) during start-up of the gasification system (1).

14. The method according to claim 13 comprising:
- controlling flow of the synthesis gas (3) from the gas storage (5) to the gasifier (2) on basis of heat required by the gasifier (2) by using a second gas flow control mechanism (7) during start-up of the gasification system (1).

15. The method according to any of the claims 13 or 14, comprising:
- producing waste heat (13) by the gas engine (5) while generating energy using the synthesis gas (3),
- transferring heat from the waste heat (13) to the synthesis gas (3) flowing from the gas storage (5) to the gasifier (2) by using a heat exchanger (8).

16. The method according to any of the claims from 10 to 15 comprising:
- cleaning (9) the synthesis gas (3) using a gas cleaning system (9) when the synthesis gas (3) flows out of the biomass gasifier (2) and before being received atleast by the gas engine (4) or the gas storage (5).

17. The method according to any of the claims from 10 to 16 comprising:
- compressing the synthesis gas (3) using a compressor (10) before storing the synthesis gas (3) in the gas storage (5).

18. The method according to any of the claims 16 or 17 comprising:
- removing inert substances from the synthesis gas (3) flowing out of the gasifier (2) inside gas separation membrane system (11) by using the synthesis gas (3) stored in the gas storage (5).
